Europäisches Patentamt

European Patent Office

Office européen des brevets

(19)

(11) Publication number: **0 510 788 A2**

# EUROPEAN PATENT APPLICATION

(12)

(21) Application number: **92300358.6**

(22) Date of filing: **16.01.92**

(51) Int. Cl.5: **G06M 11/00**, G01N 15/10

(30) Priority: **24.04.91 JP 122554/91**

(43) Date of publication of application:
**28.10.92 Bulletin 92/44**

(84) Designated Contracting States:
**DE FR GB IT**

(71) Applicant: **TOA MEDICAL ELECTRONICS CO., LTD.**
**2-1, Minatojima, Nakamachi 7-chome**
**Chuoku, Kobe(JP)**

(72) Inventor: **Kuroda, Toshiaki**
**8-28, Nakasuji 1-chome**
**Takasagoshi, Hyogoken(JP)**

(74) Representative: **Price, Paul Anthony King et al**
**D. Young & Co. 10 Staple Inn**
**London WC1V 7RD(GB)**

(54) **Method for apparatus for counting particles.**

(57) The particles (e.g. blood corpuscles) in a liquid specimen are optically or electrically counted as the liquid specimen passes through an aperture (12) of a detector (10). If a preliminary count shows that two or more particles are likely to pass simultaneously through the aperture (12), the liquid specimen is diluted during the main count that follows. This is done by injecting diluent from a diluent discharge means (C2) into the liquid specimen discharged from a liquid specimen discharge means (C1). Thus, only those liquid specimens which need diluting are in fact diluted. This prevents unnecessary dilution of liquid specimens with low particle counts and which are therefore not likely to give rise to simultaneous passes through the aperture (12). If such low-count liquid specimens are diluted unnecessarily, there is an unnecessary increase in counting time.

FIG.1

EP 0 510 788 A2

The present invention relates to a method and apparatus for counting particles by passing particles such as blood corpuscles through a small aperture or orifice and detecting and counting the particles.

A known apparatus of this type detects the electric charge (for example, the electrical resistance) caused when the particles pass through the aperture. The diameter of the aperture is about 50 to 100 $\mu$m, and the length of the aperture is about 60 to 100 $\mu$m. The aperture serves as the detection zone. The particle size is several microns.

In the particle counting apparatus of the electrical resistance type, because the detection zone is wide, several particles may pass simultaneously through the zone and correction of number is necessary. As the number of particles increases, the number of simultaneous passes increases sharply. In this case, correction of number is possible. However the magnitude of a particle signal produced by a simultaneous pass cannot be corrected, and as a result an error is caused in the measured particle size distribution. In the electrical resistance type apparatus, there is a proportional relationship between the size of a particle signal and the size of the actual particle. However, when there is a simultaneous pass, several particle signals overlap to increase the signal size, and a particle signal proportional to the size of an actual particle is not obtained.

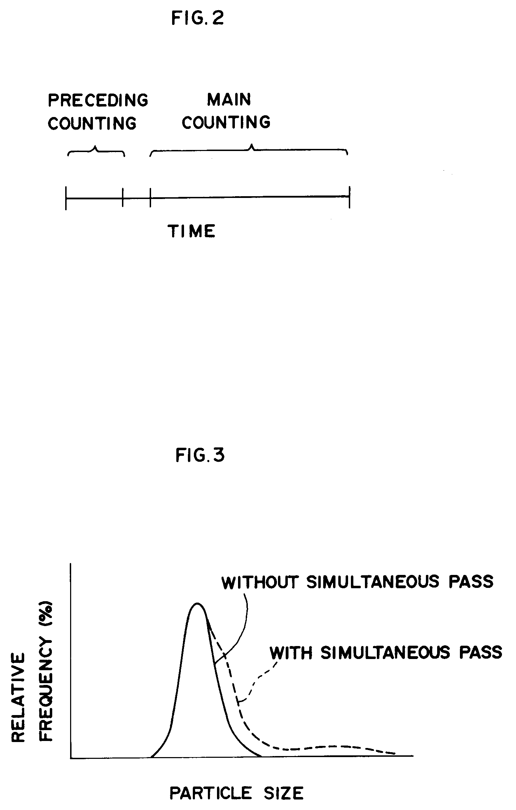

Fig. 3 is a particle size distribution graph for erythrocytes (red blood corpuscles), in which the Y axis denotes the relative frequency. The solid line shows the distribution curve without simultaneous passes, and the broken line represents the profile with simultaneous passes. With simultaneous passes, signals representing large particles become more frequent and the measured particle size distribution curve (broken line) is a distorted version of the correct distribution (solid line).

A known optical type particle counting apparatus passes a liquid specimen through a small aperture. The specimen is enclosed within a sheath layer of laminar flow sheath liquid and the particles are optically detected as they pass through the aperture (e.g. by using scattered light of fluorescence techniques). The apparatus is called a flow cytometer and, compared with an electrical resistance type apparatus, the detection zone of the aperture is narrow. This, and the fact that the sheath layer arranges the particles in a line, means that simultaneous passes occur only rarely and correction is not necessary.

A combined apparatus of electrical resistance type and optical type is also known. Light is passed across the aperture in a direction orthogonal to the flow of particles, and signals of scattered light and fluorescence are detected simultaneously for individual particles. In this case, too, there are problems relating to the magnitude of the particle signals caused by simultaneous passes.

The following methods are known to solve the above problems.

(a) Prior to counting, dilute the liquid specimen to such an extent that simultaneous passes cannot occur.

(b) Reduce the flow rate of the liquid speimen in its sheath layer so as to narrow the flow of the liquid specimen in the aperture.

Method (a) uses a lot of time and labour and, because the number of particles is different in each specimen, and the dilution proportion is not known.

Method (b) increases the counting time.

According to a first aspect of the present invention, there is provided a method for counting particles suspended in a liquid specimen, the method comprising passing the liquid specimen through an aperture of a detector, and detecting the particles by differences in the electrical or optical characteristics of the particles and liquid specimen, characterized in that the method includes the steps of:

(i) preliminary counting in which the liquid specimen is passed through the aperture at a specific flow rate;

(ii) determining a dilution proportion for the liquid specimen if the number of particles counted during the preliminary counting step exceeded a specific value; and

(iii) main counting comprising passing through the aperture the liquid specimen or, if the number of particles counted during the preliminary counting step exceeded the specific value, the liquid specimen after it has been diluted by a diluent in accordance with the dilution proportion.

With this method, only those liquid specimens which need diluting to prevent simultaneous passes are in fact diluted.

According to a second aspect of the present invention, there is provided apparatus for counting particles suspended in a liquid specimen, the apparatus comprising a detector having an aperture, liquid specimen discharge means for discharging the liquid specimen through the aperture, and detecting means for detecting the particles by differences in the electrical or optical characteristics of the particles and liquid specimen, characterized in that the apparatus further comprises: diluent discharge means for discharging diluent into the liquid specimen before the liquid specimen passes through the aperture.

The invention will now be described by way of a non-limiting embodiment with reference to the accompanying drawings, in which:-

Fig. 1 is a fluid circuit diagram showing an embodiment of a particle counting apparatus in accordance with the invention;

Fig. 2 is a sequence diagram for the particle counting by the apparatus of Fig. 1; and

Fig. 3 is a particle size distribution graph for erythrocytes.

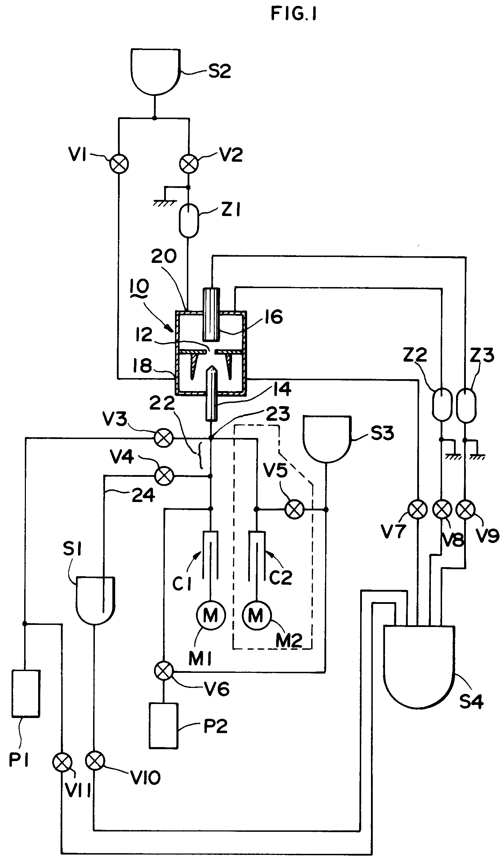

Fig. 1 is a fluid circuit diagram showing an embodiment of a particle counting apparatus in accordance with the invention. The portion enclosed by a broken line is the block added by the invention. Numeral 10 is a particle detector. At the upstream side (the lower side in the drawing) of a minute aperture 12 is a nozzle 14 for discharging a liquid specimen and at the downstream side (the upper side in the drawing) is a recovery pipe 16 for collecting the liquid.

Liquid specimen discharge means C1 (for example, a syringe driven by stepping motor M1) supplies the liquid specimen at a specific flow rate to the nozzle 14.

When valves V3, V4 are open and a pump P1 is in suction mode, the liquid specimen (e.g. a blood specimen having a known dilution) in a liquid specimen chamber S1 is sucked to fill a charging line 22 near the nozzle 14.

Fig. 2 is a sequence diagram for the particle counting by the apparatus of Fig. 1. First, preliminary (or preceding) counting is done for a short time (for example, 1 second). The valves V3, V4 are closed, and valves V1, V2, V9 are opened, and the liquid specimen discharge means C1 discharges the liquid specimen at a specific flow rate The liquid specimen in the charging line 22 is discharged from the nozzle 14 towards the minute aperture 12. On the other hand, a positive pressure (a pressure higher than atmospheric pressure) is applied to a sheath liquid chamber S2, and the sheath liquid is also discharged into the detector 10 from a feed port 18, thereby forming a sheath flow, and the particles in the liquid specimen flow neatly through the middle of the minute aperture 12. The particles passing through the minute aperture 12 are entrained by extra sheath liquid discharged from a feed port 20, recovered in the recovery pipe 16 and discharged into a waste liquid chamber S4.

During the preceding counting, the number of particles in this specimen is calculated approximately. If the number of particles is large, simultaneous passes may occur. Therefore, in the case of a large number of particles, the liquid specimen is slightly diluted for main counting. The relation between the number of particles and the possibility of simultaneous passes is known. Accordingly, by preceding counting, it is known whether dilution of the specimen is necessary or not, and the required degree of dilution is also known.

Next is the main counting. In this apparatus, not only the liquid specimen discharge means C1, but also the diluent discharge means (for example, of the same type as the liquid specimen discharge means) C2 for supplying the diluent at a specific flow rate is connected to the nozzle 14. The connecting position is the end of the charging line 22 closer to the nozzle 14. The diluent discharge means C2 and the diluent chamber S3 are connected through a valve V5. Supposing the discharge flow rates of the liquid specimen discharge means C1 and diluent discharge means C2 to be respectively Q1, Q2, the new particle concentration is Q1/(Q1 + Q2) times the old concentration. The liquid specimen and diluent are mixed in the passage from the charging line end 23 to the front end of the nozzle 14, and discharged from the tip of the nozzle 14. By varying the ratio of Q1, Q2, it is possible to change only the dilution proportion, while the sum (Q1 + Q2) of the liquids discharged from the nozzle 14 is invariable.

Although it is possible to reduce the number of simultaneous passes merely by varying the discharge flow rate of the liquid specimen discharge means C1 without installing diluent discharge means C2, the balance of the sheath liquid and liquid specimen is changed, and the width of the liquid specimen flow in the minute aperture 12 is changed. When the width of the liquid specimen flow varies, the characteristics of the simultaneous passes also vary. For example, by reducing the liquid sample discharge flow rate by 1/2 and multiplying the result by 2, the correct number of particles is not obtained.

In the embodiment of the invention, when diluting the liquid specimen, the flow rate of the specimen is not changed After the main counting, the valve V10 is opened and the liquid specimen left over in the liquid specimen chamber S1 is discharged. Then the valve V4 is opened, the valve V6 is opened and the pump P2 is put in discharge mode, so that the liquid specimen suction line 24 and liquid specimen chamber S1 are cleaned. The cleaning solution may be the diluent.

The charging line 22 is cleaned when the valves V4, V3 are opened and the pump P1 is set in suction mode. Meanwhile, the liquid sucked by the pump P1 is discharged into the waste liquid chamber S4 when the valve V3 is closed, the valve V11 is opened, and the pump P1 is set in discharge mode.

By opening the valves V1, V7, V2, V8 and applying a positive pressure to the sheath liquid chamber S2, the inside of the detector 10 can be cleaned. Incidentally, Z1, Z2, Z3 are insulation chambers for electrically insulating the flow passage.

Thus, in this embodiment, a specimen (liquid specimen) with many particles is diluted, while a specimen with a few particles is not, so that any specimen may be counted without simultaneous passes of particles. This compares with uniform dilution of all specimens where, whilst there is no problem if the specimen has many particles, a specimen with only a few particles will have only a small number of particles to be detected and therefore the counting precision will be low.

The embodiment of the invention has the following characteristics.

(1) There is a preliminary counting step, a step of determining the dilution proportion, and a main counting step. The preliminary counting is done before the main counting in order to determine the dilution proportion for a specimen having such a large count in the preliminary counting step that simultaneous passes would occur in the main counting step. The liquid specimen is diluted by this dilution proportion prior to the main counting, so that the particles may be accurately counted without simultaneous passes occurring. The sum of the liquid specimen flow rate and diluent flow rate is always constant, and the flow rate balance of the sheath liquid and the diluted liquid specimen is constant, and also the diameter of the liquid specimen flow in the minute aperture is constant, so that accurate counting is possible.

(2) The particle counting apparatus has diluent discharge means which discharges the diluent simultaneously with the liquid specimen discharge in the case of a specimen with so many particles that there would otherwise be simultaneous passes during the main counting. The diluted liquid specimen passes through the minute aperture of the detector. Therefore, simultaneous passes do not occur and the particle counting precision is enhanced.

Having described a preferred embodiment of the invention with reference to the accompanying drawings, it is to be understood that the invention is not limited to that precise embodiment, and that various changes and modifications may be effected therein by one skilled in the art without departing from the scope of the invention.

**Claims**

1. A method for counting particles suspended in a liquid specimen, the method comprising passing the liquid specimen through an aperture (12) of a detector (10), and detecting the particles by differences in the electrical or optical characteristics of the particles and liquid specimen, characterized in that the method includes the steps of:

   (i) preliminary counting in which the liquid specimen is passed through the aperture (12) at a specific flow rate;

   (ii) determining a dilution proportion for the liquid specimen if the number of particles counted during the preliminary counting step exceeded a specific value; and

   (iii) main counting comprising passing through the aperture (12) the liquid specimen or, if the number of particles counted during the preliminary counting step exceeded the specific value, the liquid specimen after it has been diluted by a diluent in accordance with the dilution proportion.

2. A method according to claim 1, wherein during step (iii) the flow rate of the liquid specimen or the diluted liquid specimen is substantially equal to the specific flow rate of step (i).

3. A method according to claim 1 or 2, wherein the liquid specimen of step (i) and the liquid specimen or diluted liquid specimen of step (iii) are each enclosed by a flow of sheath liquid.

4. A method according to claims 2 and 3, wherein the flow rate of the sheath liquid is substantially the same in steps (i) and (iii).

5. Apparatus for counting particles suspended in a liquid specimen, the apparatus comprising a detector (10) having an aperture (12), liquid specimen discharge means (M1, C1) for discharging the liquid specimen through the aperture, and detecting means for detecting the particles by differences in the electrical or optical characteristics of the particles and liquid specimen, characterized in that the apparatus further comprises: diluent discharge means (M2, C2) for discharging diluent into the liquid specimen before the liquid specimen passes through the aperture (12).

6. Apparatus according to claim 5, further comprising sheath liquid discharge means (S2) for enclosing the liquid specimen with sheath liquid before the liquid specimen passes through the aperture (12).

FIG.1

## FIG. 2

PRECEDING
COUNTING

MAIN
COUNTING

TIME

## FIG. 3

WITHOUT SIMULTANEOUS PASS

WITH SIMULTANEOUS PASS

RELATIVE
FREQUENCY (%)

PARTICLE SIZE